# EUROPEAN PATENT APPLICATION

(11) **EP 1 524 754 A1**
(43) Date of publication of application: **20.04.2005**
(21) Application number: 03103782.3
(22) Date of filing: 13.10.2003
(51) Int. Cl.: H02K 15/00, H02K 3/22, B23K 9/167

(54) **Method of repairing water-cooled stator windings in generators**

(71) Applicant: ALSTOM Technology Ltd, 5400 Baden (CH)
(72) Inventor: Lotz, Hubert, 88310, Ventron (FR); Mougin, Xavier, 70000, Frotey Les Vesoul (FR); Petrement, Christian, 70110, Vellechevreux (FR); Poirson, David, 70270, Melisey (FR); Veith, Eric, 90300, Offemont (FR)

(57) **Abstract**

According to the invention there is provided a method of repairing fluid-cooled stator windings in generators, the stator windings comprising stator bars including hollow conductors (2) sealed into a respective water box (3) at each end thereof, the method comprising opening the water box and applying over the entire exposed interior surface of the opened box a coating of a filler metal.

## Description

### Field of the Invention

This invention relates to a method of repairing the stator bars constituting water-cooled stator windings in generators and a water-cooled stator bar for a generator, comprising at each end thereof a water box.

### Background to the Invention

Large generator stator bars typically comprise a plurality of small solid and hollow conductors, usually of copper, brazed together and brazed into a water box at each end whereby cooling water may be circulated through the hollow conductors. An important maintenance concern with this type of water-cooled stator bars is the risk of water leakage from the water boxes to the stator bar insulation. Leakage can arise as a result of: poor quality of the original brazing during manufacture of the bar; corrosion processes in the water box; or mechanical fatigue. If leakage occurs, the presence of water in the stator bar insulation will eventually result in electrical failure of the generator.

It is desirable to be able to effect a repair to the water box with the bar *in situ* in the generator, since dismantling of the generator to effect replacement of the defective bar is time-consuming and costly.

In US-A-5 605 590 a method of re-sealing the joints between the individual conductors and the water box is described. The method includes sealing the stator bar end connections from within the stator bar end fitting. Particularly, a low viscosity epoxy is initially applied from within the chamber of the end fitting by use of a horoscope and a syringe-type applicator, the low viscosity epoxy being applied to all joints between the adjacent strands of the stator bar and between the fitting and the outermost strands of the stator bar. A high viscosity epoxy is then applied over the low viscosity epoxy using the horoscope and applicator. The epoxy is then cured. This method has several drawbacks. Since no major cleaning of the existing water box conductors is executed, the epoxy coating integrity can be jeopardized over time. Further, the epoxy layer covers only the joints between the individual conductors and the water box. Finally, due to the aging and the wear of the epoxy material, this method can only produce a temporary fix.

US-A-5809632 discloses a repair method in which the water box is first cut open and then the joints between the conductors are soldered using a TIG torch or other heating device. The cover to the water box is then welded back in place. Due to the enormous heat peaks caused by the welding operation, the stator bar is permanently cooled during the imperviousness resumption and requires specific cover fixed during operations at the back of the water box. Additionally, this method has a further major drawback since only the oxide film at the surface extremities of the conductors in the water box is removed but no major cleaning is conducted before soldering the conductors. This will induce a risk of deterioration of the coating metallic properties due to thermal damage of the remaining pollution agents behind strands surface. In addition, in this method as a major drawback in terms of associated risk to the methodology the second stator bar electrically linked to the repaired one has its water box as well cut and a new front cover welded with the electrical link between bars modified from the original design.

To facilitate the implementation of on-site repairs in some cases a dedicated stator winding design has been developed in which the water box is provided with a removable front cover.

### Summary of the Invention

Accordingly, the technical problem to be solved by the present invention is to provide a method of repairing generator stator windings which will improve the reliability and service life of the repaired components and which avoids the drawbacks of the cited prior art. Further, the invention should provide a repair method for in situ repair to avoid costs caused by disassembling the whole generator. Furthermore, a fluid-cooled stator bar for a generator, comprising at each end thereof a water box with extended life cycle should be provided.

This problem is solved by a method of repairing fluid-cooled stator windings in generators having the features of claim 1 and a fluid-cooled stator bar for a generator, comprising at each end thereof a water box according to claim 9. Preferred embodiments of the present invention are described in the dependent claims.

The present invention provides a method of repairing generator stator windings which improves the reliability and service life of the repaired components and which avoids the drawbacks of the cited prior art. The repair method according to the present invention provides for a in situ repair and avoids costs caused by disassembling the whole generator. Thus, the inventive method can also be applied before leakage or other damages occur and thus serves as damage prevention as well.

According to the invention the method of repairing fluid-cooled stator windings in generators, the stator windings comprising stator bars consisting of hollow conductors sealed into a respective water box at each end thereof, comprises: opening the water box; grinding the entire exposed copper conductor surface of the opened water box; applying over the back end of the exposed interior surface of the opened water box a coating of a filler metal; closing the water box by means of brazing of a front cover of the original geometry. Due to the prior grinding of the entire exposed surface and due to the application of the filler or coating metal of this surface, loss of tightness of the brazed joint is effectively prevented for the life cycle of the respective generator and as well absence of corrosion process due to stagnant water in brazed joint cavities ensured. Depending on the type of the respective water box, the front end of the water box might be cut off or, if the water box is equipped with a bolted front cap cover soft brazed on the water box sleeve, this front cap can be removed by using induction heating. The cleaning of the exposed surface can be conducted by using stainless steel brushes and/or by using hand milling equipment, for instance with spherical head grinders. If needed, also cleaning agents can be used. For closing the water box after applying the filler metal, the original front cover may be re-used or a new cover might be applied.

Preferably, the filler metal is a copper alloy, more preferably containing silver and phosphorus. An especially preferred alloy comprises 15% silver, 80% copper and 5% phosphorus. Preferably no flux is used. Usage of the described material has been proven to not cause any chemical interaction with pre-existing materials in the generator and therefore no unexpected damages caused by chemical interactions are caused.

The filler metal is preferably applied by the use of a TIG torch. A preferred TIG unit includes a double flux torch (for example the TIG FORCE system from the AIR LIQUIDE welding group) using a mixture of Argon and Helium, preferably 80% Argon and 20% Helium. It has been found that the use of the double flux torch combined with the preferred gas mixture ensures very low heat diffusion during the application of the filler metal, thereby not jeopardising the integrity of the stator bar wall insulation. This has the advantage that during the repair process no specifically designed additional cooling system has to be installed to avoid overheating of the stator bar insulation.

Preferably, where the conductor ends extend beyond the inner surface of the water box, the method of the invention comprises, before application of the filler metal, the step of machining the conductor ends until they are substantially flush with the inner surface. This ensures accurate cleaning and will avoid risk of copper conductor melting during the repair process. In addition, in case of hollow conductors clogging (usually, a clogging phenomenon will produce accumulation of oxides at the outlet section of the conductors), the method will ensure to recover the original individual strand flow rate.

The method of the present invention allows repairs to be carried out on the stator bar without requiring its removal from the generator, and enables the working life of the component to be substantially extended.

According to the present invention, a fluid-cooled stator bar for a generator, comprising at each end thereof a water box, is characterised in that at least one water box has a coating of filler metal over the back end of the internal surface thereof. A preferred embodiment provides that the coating extends over the whole of the back end of the internal surface. Thus the life cycle is prolonged and the risk of damages and leakage is severely reduced.

### Brief Description of the Drawings

A more complete appreciation of the invention and of the attendant advantages thereof will be readily obtained as the same becomes better understood by reference to the following detailed description when considered in connection with the accompanying drawings. In the drawings:
Figure 1 is a sectional view through one end of one type of stator bar with the end of the water chamber removed;
Figure 2 is a corresponding view showing the bar after machining of conductor ends;
Figure 3 illustrates the result of the brazing coating stage;
Figures 4, 5 and 6 are respectively top plan, side elevation and end views of another type of stator bar to which the method of the invention can be applied.

### Detailed Description of the Illustrated Method

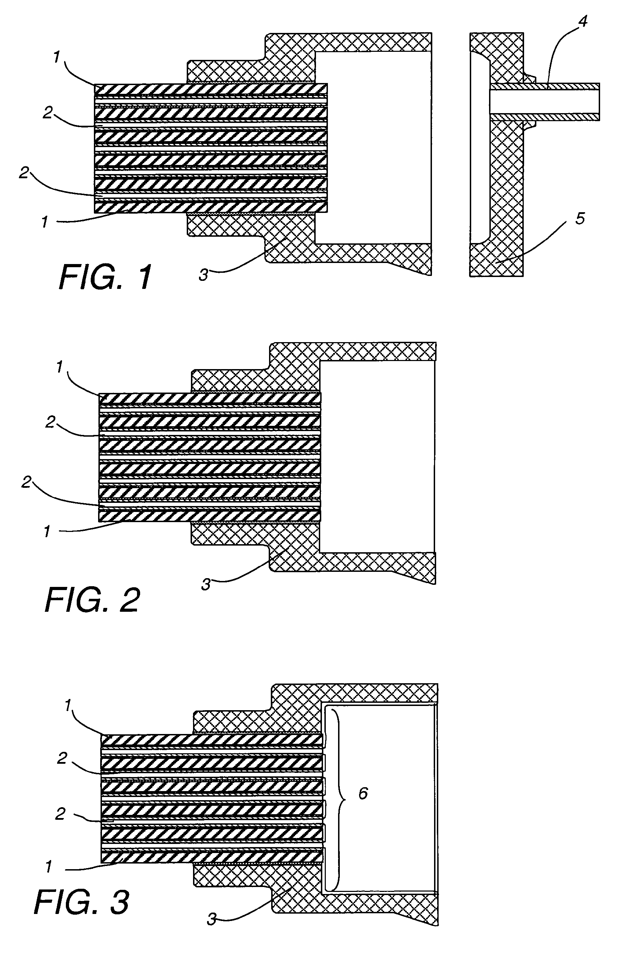

Referring first to Figure 1, a generator stator bar comprises a plurality of solid copper conductors 1 and hollow copper conductors 2 brazed together and sealed into a water box 3 by brazing. The water box 3 has a water inlet or exit pipe 4 therethrough, of which only a short section is shown in the Figure. When a water leak is detected, it is necessary to remove the winding head insulation, bar to bar or bar to phase ring electrical connections, the cooling water connection and the bar wall insulation to a distance of about 40 to 50mm from the rear of the water box 3. The end of the bar is illustrated in the Figure in this prepared state, which enables the precise location of the leak to be observed. It is assumed for the purposes of this illustration to have arisen through a failure of the brazing between the conductors and the water box. The first step of the repair method is to cut through the box 3 to remove the front part 5 thereof, including the pipe 4. This is preferably done using a locating jig. Figure 1 shows the bar end at the completion of this stage. Scavenging nitrogen flow is then installed at the opposite end of the bar.

The next step in the method is to grind the ends of the solid and hollow conductors 1 and 2 until they are leveled with the internal surface of the water box 3, as shown in Figure 2. Further, this also provides the removal of the oxide film and deep cleaning to eliminate under surface corrosion. This step is suitably carried out using a hand milling tool equipped with a spherical head. To control the external temperature of the end of the bar and its water box, glass fibre tape is wrapped around the rear part of the box and the uninsulated part of the bar projecting therefrom. The water box is then pre-heated by a 50 kW high-frequency induction heater to a temperature of 250 to 300 degrees C in readiness for the TIG brazing operation. The TIG brazing operation is carried out while controlling the temperature of the copper conductors at the rear of the water box 3 to keep it below 180° C. The operation comprises: installing reverse nitrogen scavenging flow in the bar at 5 litres per minute; performing a first operation to melt the conductors on the green bar outer surface next to the box 3 and between each conductor; performing a second similar operation using filler metal 0.5 B1 (NFA 81362) (15% silver, 80% copper, 5% phosphorus); and performing a third operation without filler metal to smooth the surface and eliminate possible cracks.
Figure 3 shows the water box with an internal coating 6 of the filler material, resulting from these operations.

After inspection, and where appropriate machining using a milling, counter sink bit or pencil grinder, to ensure that no filler material obstructs the hollow conductors, a pressure test is carried out to ensure water-tightness by means of installation of a temporary cover. The front part 5 of the water box and its mating surface are then prepared for reattachment by manually machining surfaces to ensure that any clearance between them is less then 0.1 millimetres and the roughness is less than 1.6. The front part 5, to which the electrical connection and the water connection are already attached, is attached to the box 3 by brazing, using high-frequency induction brazing equipment and a 0.4 millimetres shim of the same filler metal has is used for the internal coating process and with a nitrogen scavenging flow rate set at 10 litres per minute. The heating is performed by means of a single closed loop inductor with concentrators. Each is required to hold the front part 5 in position and at a constant pressure on the brazed joint during the operation. The temperature is regulated to 720° C maximum. with a thermocouple installed at 3 millimetres from the joint of the cover. It should be noted that the original front part can be reinstalled only if the bar to bar electrical connection was originally brazed with a filler metal whose melting point is lower than that of the 0.5 B1 metal. If this is not the case, the original electrical connections must first be milled away and new ones raised on using AGB 50 (50% silver, 50% copper) filler metal. The pressure-tightness of the bar is then tested by way of a pressure or helium test.

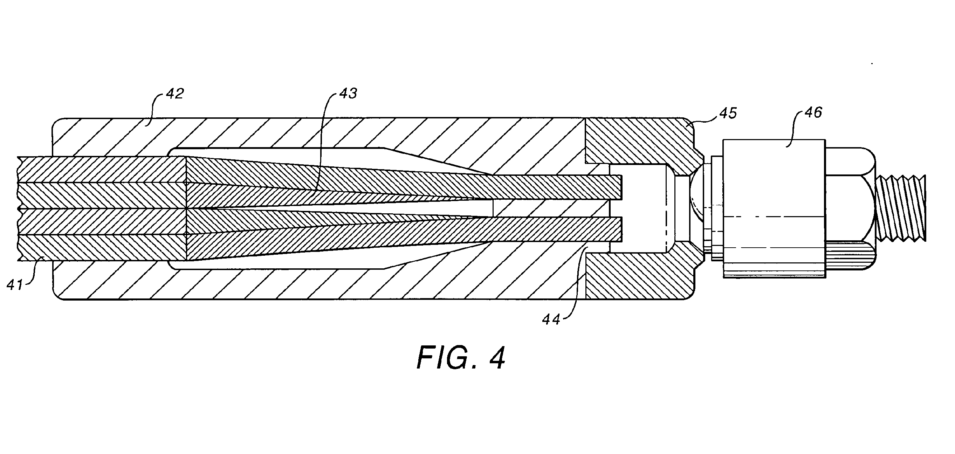

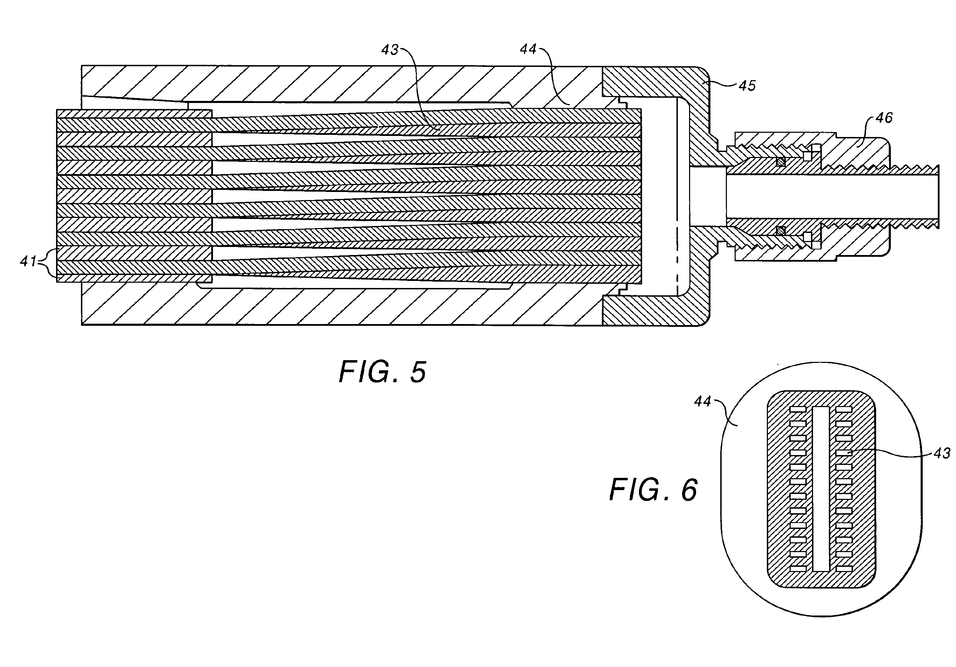

The invention has been particularly described with reference to a conventional type of water box arrangement for a stator bar. A similar process may be used for other types of stator bar water box, for example the type having a removable front cover, as illustrated in Figures 4 to 6. In this type of water box clip, the solid conductors 41 terminate at and are brazed in the rear end 42 of the clip, while the hollow conductors 43 continue forward to the front end 44 of the clip, where they are arranged in an array and are brazed in position.

A front cover 45 is bolted and soft brazed on to the clip over the open ends of the hollow conductors 43 to constitute the water box. The front cover 45 is provided with a hydraulic connection 46 for connection of the cooling water supply. In the method of the invention applied to this type of stator bar, the cover is unbolted and heated by mans of an induction heater to release the soft brazing. The hollow conductor ends thus exposed are cleaned and have their oxide film removed by means of a stainless steel brush and other deep cleaning means and agents if necessary, and coolers are then installed around the body of the water box, with fibre glass tape around the conductors at the rear of the box. The TIG brazing and testing steps are then carried out in the same way as for the conventional water box described with reference to Figures 1 to 3.

The joint surface for receiving the cover 45 is then milled using a specific jig calibrated to the shape of the water box face, before reinstallation of the cover in accordance with the original bar manufacturing process.

### Reference Signs

1 Conductor
2 Conductor
3 Water Box
4 Pipe
5 Front Part
6 Coating
41 Solid Conductor
42 Rear End
43 Hollow Conductor
44 Front End
45 Front Cover
46 Hydraulic Connection

## Claims

1. A method of repairing water-cooled stator windings in generators, the stator windings comprising stator bars including hollow conductors (2) sealed into a respective water box (3) at each end thereof, the method comprising:
opening the water box;
grinding the entire exposed copper conductor surface of the opened water box; applying over the back end of the exposed interior surface of the opened water box a coating (6) of a filler metal;
closing the water box by means of brazing of a front cover of the original geometry.

2. A method according to Claim 1, **characterised in that** the filler metal is a copper alloy.

3. A method according to Claim 2, **characterised in that** the alloy contains silver and phosphorus.

4. A method according to Claim 3, **characterised in that** the alloy contains 80% copper, 15% silver and 5% phosphorus.

5. A method according to any preceding claim, **characterised in that** the filler metal is applied by means of a TIG torch.

6. A method according to Claim 5, wherein the TIG torch is a double flux TIG torch.

7. A method according to Claim 5 or Claim 6, wherein the TIG torch uses a mixture of argon and helium, preferably comprising 80% argon.

8. A method according to any preceding claim, which comprises, where the conductor ends extend beyond the inner surface of the water box, the step of machining the conductor ends until they are substantially flush with the inner surface, before application of the filler metal.

9. A water-cooled stator bar for a generator, comprising at each end thereof a water box, **characterised in that** at least one water box (3) has a coating of filler metal over the back end of the internal surface thereof.
